# EUROPÄISCHE PATENTANMELDUNG

(11) **EP 2 472 130 A1**
(43) Veröffentlichungstag der Anmeldung: **04.07.2012**
(21) Anmeldenummer: 12001828.8
(22) Anmeldetag: 22.11.2010
(51) Int. Cl.: F16B 7/04, F16B 7/18, F24J 2/52

(54) **Verbinderelement**

(30) Priorität: 22.12.2009 DE 202009017491 U
(62) Teilanmeldung aus: 10014827.9
(71) Anmelder: VM Edelstahltechnik GmbH, 58840 Plettenberg (DE)
(72) Erfinder: MÄCHTLE, Daniel, 58840 Plettenberg (DE)
(74) Vertreter: Althoff, Alexander

(57) **Zusammenfassung**

Bei einem Verbinderelement (10; 60) zur Verbindung von zwei Bauteilen (21, 22, 23) mit einem ersten und einem zweiten in einem Winkel zueinander stehenden Schenkel (11, 12; 61, 62), sind die Schenkel (11, 12; 61; 62) gelenkig miteinander verbunden.

## Beschreibung

Die vorliegende Erfindung betrifft ein Verbinderelement und einen Kreuzverbinder zur Verbindung von zwei Bauteilen.

Bei der Montage von Stützgerüsten, Unterkonstruktionen oder dergleichen, beispielsweise für Solaranlagen, sind verschiedene Bauteile miteinander zu verbinden. Grundbauelemente für derartige Konstruktionen sind Profilschienen, die mit anderen Bauteilen, wie beispielsweise Dachhaken, verschiedenartigen Klemmen und insbesondere auch mit weiteren Profilschienen, fest zu verbinden sind.

Es sind hierfür bereits Verbinderelemente bekannt, die aus zwei in einem rechten Winkel zueinander stehenden Schenkeln bestehen, die jeweils eine Bohrung für ein Befestigungsmittel umfassen. Mit derartigen Verbinderelementen können beispielsweise zwei rechtwinklig zueinander stehende Profilschienen aneinander befestigt werden. Die Verbinderelemente können für die Befestigung einer Vielzahl unterschiedlicher Bauteile eingesetzt werden. Derartige Verbinderelemente haben jedoch den Nachteil, dass der Winkel, in dem die zu befestigenden Bauteile zueinander stehen, in der Regel auf 90° festgelegt ist. Dies ist beispielsweise dann nachteilig, wenn das Verbinderelement für eine Tragkonstruktion für eine Solaranlage eingesetzt werden soll, bei der bestimmte Winkel zur Ausrichtung von Solarmodulen im Hinblick auf die Sonneneinstrahlung zu realisieren sind. Bisher wurde dieses Problem beispielsweise dadurch gelöst, dass die Konstruktion bei Winkeln von größer oder kleiner 90° geschweißt wurde.

Der Erfindung liegt die Aufgabe zugrunde, verbesserte Verbinderelemente bereitzustellen, die die geschilderten Nachteile von Verbinderelementen aus dem Stand der Technik beseitigen.

Diese Aufgabe wird durch ein Verbinderelement und einen Kreuzverbinder gelöst, wie sie Gegenstand der unabhängigen Ansprüche sind. Durch die in den abhängigen Ansprüchen aufgeführten Maßnahmen sind vorteilhafte Weiterbildungen und Verbesserungen des in den unabhängigen Ansprüchen angegebenen Verbinderelementes und des Kreuzverbinders möglich.

Das erfindungsgemäße Verbinderelement ist zur Verbindung von zwei Bauteilen vorgesehen. Es umfasst zwei in einem Winkel zueinander stehende Schenkel und ist dadurch gekennzeichnet, dass beide Schenkel gelenkig miteinander verbunden sind. Der Kern der Erfindung liegt darin, dass durch die gelenkige Verbindung die beiden Schenkel des Verbinderelements zwei Bauteile in einem nahezu beliebigen Winkel miteinander verbunden werden können. Nach Einstellung des gewünschten Winkels kann dieser durch Feststellen der gelenkigen Verbindung fixiert werden. In anderen Ausführungsformen kann auf eine Feststellung des Winkels verzichtet werden, wenn sich der Winkel beispielsweise durch die Anordnung und die Länge der zu montierenden Bauteile, beispielsweise durch eine Rahmenkonstruktion aus Profilschienen, von selbst ergibt. Der besondere Vorteil liegt hierbei unter anderem darin, dass ein universell einsetzbares Verbinderelement für im Prinzip alle denkbaren Winkel eingesetzt werden kann. Es ist nicht erforderlich, für jeden gewünschten Winkel ein spezielles Verbinderelement mit einem festen, vorgegebenen Winkel zur Verfügung zu stellen und aufwendige Schweißverbindungen herzustellen. Der gewünschte Winkel kann während der Montage je nach Bedarf eingestellt und gegebenenfalls fixiert werden.

Die gelenkige Verbindung kann beispielsweise derart realisiert sein, dass beide Schenkel jeweils einen oder mehrere Vorsprünge aufweisen, die ineinandergesteckt werden können und jeweils mit Bohrungen versehen sind, die im zusammengesteckten Zustand fluchten und durch die ein Bolzen oder ein (Zylinder)stift gesteckt werden kann, um die gelenkige Verbindung zu realisieren. An den Enden des Zylinderstiftes können Gewinde für Schraubmuttern vorgesehen sein, um mit Hilfe der Schraubmuttern den Stift zu fixieren.

In einer bevorzugten Ausführungsform des erfindungsgemäßen Verbinderelements ist die gelenkige Verbindung lösbar. Dies kann beispielsweise durch die erwähnte Verbindung beider Schenkel durch einen Zylinderstift realisiert sein. Der Zylinderstift kann herausgezogen werden, um beide Schenkel voneinander zu trennen und in anderer Konstellation wieder miteinander zu verbinden. Der Vorteil dieser Ausführungsform liegt darin, dass die Schenkel in unterschiedlicher Ausrichtung zueinander je nach Anwendungsfall miteinander verbunden werden können. So können die Schenkel des Verbinderelements derart zusammengefügt werden, dass der Winkel zwischen zwei aneinander zu befestigenden Bauteilen sehr klein ist, wobei die Befestigung der Bauteile an dem Verbinderelement hierbei von einer Anordnung der Schenkel ausgeht, bei der die Schenkel gewissermaßen verdreht zueinander in einer Ebene liegen. Die Befestigung der Bauteile erfolgt bei einem Schenkel von oben und bei dem anderen Schenkel von unten. Hierdurch können sehr kleine Winkel der Bauteile zueinander realisiert werden. Die Lösbarkeit der gelenkigen Verbindung erhöht damit erheblich die Einsatzmöglichkeiten des erfindungsgemäßen Verbinderelementes.

Bei einer bevorzugten Ausführungsform ist vorgesehen, dass eine Fläche wenigstens eines Schenkels parallel zu den seitlichen Außenkanten seitliche Führungsleisten aufweist. Diese Führungsleisten können beispielsweise eine zu befestigende Profilschiene umgreifen, so dass hierdurch die Fixierung und die Befestigung des erfindungsgemäßen Verbinderelements an der Profilschiene erheblich erleichtert werden. Weiterhin wird hierdurch ein Verrutschen des Verbindungselements auf der Profilschiene oder einem anderen Bauteil vermieden und damit die Stabilität der Verbindung erhöht.

Mit Vorteil sind zwischen den seitlichen Führungsleisten ein oder mehrere parallel dazu verlaufende weitere Leisten vorgesehen. In anderen Ausführungsformen kann auf die seitlichen Führungsleisten verzichtet werden, sodass ausschließlich eine oder mehrere Leisten auf der Fläche des Schenkels vorgesehen sind. Diese Leisten sind vorzugsweise so angeordnet, dass sie an eine zu befestigende Profilschiene angepasst sind, indem sie beispielsweise in gegengleiche Vertiefungen oder Schlitze der Profilschiene eingreifen, wodurch die Positionierung und damit die Montage an der Profilschiene oder einem anderen Bauteil vereinfacht wird und weiterhin der Halt und die Stabilität der Verbindung verbessert wird.

Wenigstens eine der Flächen wenigstens eines Schenkels des erfindungsgemäßen Verbinderelements weist vorzugsweise eine konvexe Wölbung bzw. eine leichte Abrundung der Oberfläche auf. Hierdurch wird die Materialstärke des Verbinderelements erhöht und damit dessen Stabilität vergrößert. Weiterhin wird hierdurch die Ausbildung von scharfen Kanten vermieden, sodass die Handhabung für den Monteur angenehmer wird.

Beide Schenkel des erfindungsgemäßen Verbinderelements können jeweils ein Rundloch oder jeweils ein Langloch aufweisen. Ein Langloch hat gegenüber einem Rundloch den Vorteil, dass die Befestigung des Verbinderelements variabler gestaltet werden kann, und die Verbindung zwischen dem Verbinderelement und dem Bauteil über das Langloch eingestellt werden kann. Es kann auch vorgesehen sein, dass einer der Schenkel ein Langloch und der andere Schenkel ein Rundloch aufweisen, sodass das Verbindungselement sehr variabel einsetzbar ist.

Das erfindungsgemäße Verbinderelement ist vorzugsweise aus einem Metall, beispielsweise aus Aluminium gefertigt. Vorzugsweise wird es aus Druckgussteilen hergestellt, beispielsweise aus Aluminiumdruckgussteilen oder Zinkdruckgussteilen. Es kann ferner auch aus Edelstahlteilen gefertigt sein.

Das erfindungsgemäße Verbinderelement ist insbesondere dort mit Vorteil einsetzbar, wo zwei Bauteile in einem Winkel von ungleich 90° miteinander zu verbinden sind. Beispielsweise eignet es sich für die Montage von Trägergerüsten für Solaranlagen.

Die Erfindung umfasst ferner ein Verbindungselement, das als Kreuzverbinder einsetzbar ist. Der Kreuzverbinder weist einen ersten und einen zweiten Schenkel auf, wobei die Schenkel in einem festen Winkel, insbesondere einem rechten Winkel, zueinander stehen. Der zweite Schenkel weist auf seiner dem ersten Schenkel abgewandten Fläche wenigstens ein Hakenelement, insbesondere einen parallel zu der Breite des Schenkels verlaufenden Steg auf. Dieses Hakenelement bzw. der Steg sind dazu vorgesehen, eine beispielsweise C-förmige Einlegenut einer ersten Profilschiene, insbesondere eine seitliche Einlegenut der Profilschiene, zu hintergreifen. Hierdurch kann der Kreuzverbinder verschiebbar in die Profilschiene eingehakt werden. Der andere bzw. der erste Schenkel des Kreuzverbinders ist mit einer Bohrung bzw. einer Aussparung versehen, durch die ein Befestigungsmittel hindurchgeführt werden kann, sodass an dem ersten Schenkel ein weiteres Bauteil, beispielsweise eine weitere Profilschiene, im rechten Winkel zu der ersten Profilschiene, in die der Kreuzverbinder eingehakt ist, befestigt werden kann. Erfindungsgemäß weist der erste Schenkel auf der von dem zweiten Schenkel abgewandten Fläche an dem offenen Ende des Schenkels im Bereich der Kante bzw. am äußeren Rand wenigstens eine Verdickung, insbesondere einen parallel zum Rand verlaufenden Steg auf. Durch diese Verdickung liegt der erste Schenkel nicht vollständig plan auf dem anderen Bauteil, beispielsweise der weiteren Profilschiene, auf. Vielmehr nimmt der erfindungsgemäße Kreuzverbinder durch diese Verdickung bei dem Spannen des Befestigungsmittels eine gewisse Hohllage ein und der Kreuzverbinder wird gegen die erste Profilschiene gedrückt, sodass sich die Einhakung des Hakenelements in der Einlegenut der ersten Profilschiene verspannt und hierdurch die Verbindung über das Hakenelement weiter stabilisiert und fixiert wird. Durch die Hohllage wird einem Kippmoment entgegengewirkt, sodass eine sehr feste Verbindung der beiden Bauteile über den erfindungsgemäßen Kreuzverbinder realisiert wird.

Die Aussparung in dem ersten Schenkel für das Befestigungsmittel kann beispielsweise ein Langloch oder ein Rundloch sein. Ein Langloch hat den Vorteil einer größeren Flexibilität bei der Befestigung des erfindungsgemäßen Kreuzverbinders, indem die Verbindung zwischen dem Kreuzverbinder und dem weiteren Bauteil über das Langloch eingestellt werden kann.

Vorzugsweise sind auf der von dem zweiten Schenkel abgewandten Fläche des ersten Schenkels parallel zu den Außenkanten seitlich verlaufende Führungsleisten vorgesehen. Diese Führungsleisten können beispielsweise eine darunter zu befestigende Profilschiene umgreifen und erleichtern so die Positionierung und die Fixierung des erfindungsgemäßen Kreuzverbinders. Weiterhin wird hierdurch die Verbindung des Kreuzverbinders mit der Profilschiene stabilisiert, da ein Verrutschen vermieden wir. Andere Ausführungsformen können ohne seitliche Führungsleisten realisiert sein, um den erfindungsgemäßen Kreuzverbinder noch variabler und unabhängig von der Gestaltung einer Profilschiene oder eines anderen Bauteils einsetzen zu können.

Die einander zugewandten Flächen der Schenkel des erfindungsgemäßen Kreuzverbinders können jeweils eine konvexe Wölbung aufweisen. Hierdurch wird die Materialstärke des erfindungsgemäßen Kreuzverbinders und damit dessen Stabilität erhöht. Weiterhin werden durch die konvexe Wölbung scharfe Kanten vermieden, wodurch die Handhabung des erfindungsgemäßen Kreuzverbinders für den Monteur noch angenehmer wird.

In der Mitte der Fläche des zweiten Schenkels kann die gewölbte Fläche von einer zentralen Ausnehmung oder Vertiefung unterbrochen sein. Hierdurch kann der Zugang für die Betätigung des Befestigungsmittels erleichtert werden, insbesondere wenn der erfindungsgemäße Kreuzverbinder verhältnismäßig klein und die Bohrung im ersten Schenkel für das Befestigungsmittel relativ nah am zweiten Schenkel vorgesehen ist.

Der erfindungsgemäße Kreuzverbinder ist vorzugsweise aus Metall gefertigt, um eine ausreichende Stabilität und Beständigkeit zu gewährleisten. Er kann beispielsweise als Strangpressprofil, insbesondere aus Aluminium, gefertigt sein. Besonders bevorzugt ist die Fertigung als Druckgussteil, beispielsweise als Aluminiumdruckgussteil oder Zinkdruckgussteil.

Weitere Merkmale und Vorteile der Erfindung ergeben sich aus der nachfolgenden Beschreibung von Ausführungsbeispielen im Zusammenhang mit den Zeichnungen. Hierbei können die verschiedenen Merkmale jeweils für sich oder in Kombination miteinander verwirklicht sein.

In den Zeichnungen zeigen:
- Figur 1: eine erste Ausführungsform eines erfindungsgemäßen Verbinderelements;
- Figur 2: eine Anordnung von Profilschienen unter Verwendung von erfindungsgemäßen Verbinderelementen;
- Figur 3: eine Seitenansicht des in Figur 2 dargestellten Ausschnitts A;
- Figur 4: eine Seitenansicht des in Figur 2 dargestellten Ausschnitts B;
- Figur 5: das in der Figur 4 gezeigte Verbinderelement in detaillierter Darstellung;
- Figur 6: eine weitere Ausführungsform eines erfindungsgemäßen Verbinderelements;
- Figur 7: eine erste Ausführungsform eines erfindungsgemäßen Kreuzverbinders in einer Ansicht von schräg oben;
- Figur 8: der erfindungsgemäße Kreuzverbinder aus Figur 7 in einer Ansicht von schräg unten;
- Figur 9: der Kreuzverbinder aus Figur 7 in einer geschnittenen Darstellung;
- Figur 10: eine schematische Darstellung zweier mit einem erfindungsgemäßen Kreuzverbinder verbundener Profilschienen und
- Figur 11: eine weitere Ausführungsform des erfindungsgemäßen Kreuzverbinders in einer Ansicht von schräg oben.

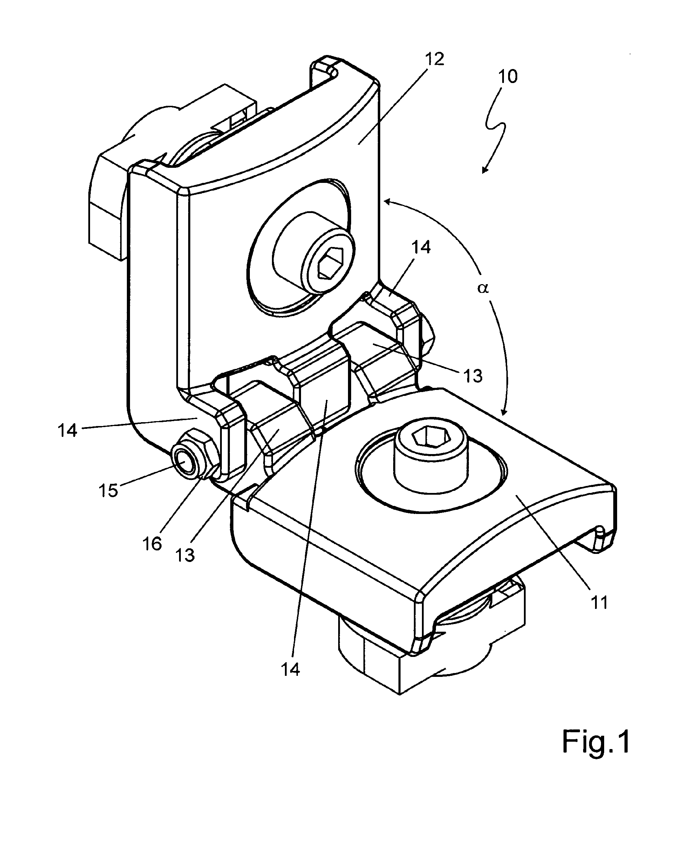

**Figur 1** zeigt eine isometrische Ansicht eines erfindungsgemäßen Verbinderelements 10. Das Verbinderelement 10 umfasst einen ersten Schenkel 11 und einen zweiten Schenkel 12. Die Schenkel 11 und 12 sind gelenkig miteinander verbunden. Hierfür weisen die Schenkel 11 und 12 jeweils mehrere Vorsprünge 13, 14 auf, die verzahnt ineinandergreifen. Zur

Ausbildung der gelenkigen Verbindung sind die Vorsprünge 13, 14 mit Bohrungen versehen, sodass beim Zusammenführen der Teile 11 und 12 ein fluchtender Kanal gebildet wird, durch den ein Zylinderstift 15 geführt und damit die gelenkige Verbindung der Schenkel 11 und 12 hergestellt werden kann. Ein zwischen den Schenkeln 11 und 12 gebildeter Öffnungswinkel α des erfindungsgemäßen Verbinderelements 10 ist frei einstellbar, sodass das Verbinderelement 10 zur Verbindung von zwei Bauteilen, beispielsweise zwei Profilschienen, in einem beliebigen Winkel verwendet werden kann. Der beide Schenkel 11 und 12 miteinander verbindende Zylinderstift 15 kann beispielsweise mittels eines Schraubenkopfes und einer Mutter 16 feststellbar sein, sodass der Öffnungswinkel des Verbinderelements 10 festgelegt wird. In anderen Ausführungsformen kann der Öffnungswinkel variabel bleiben und sich durch die Anordnung der verschiedenen miteinander zu verbindenden Profilschienen oder anderen Bauteile ergeben.

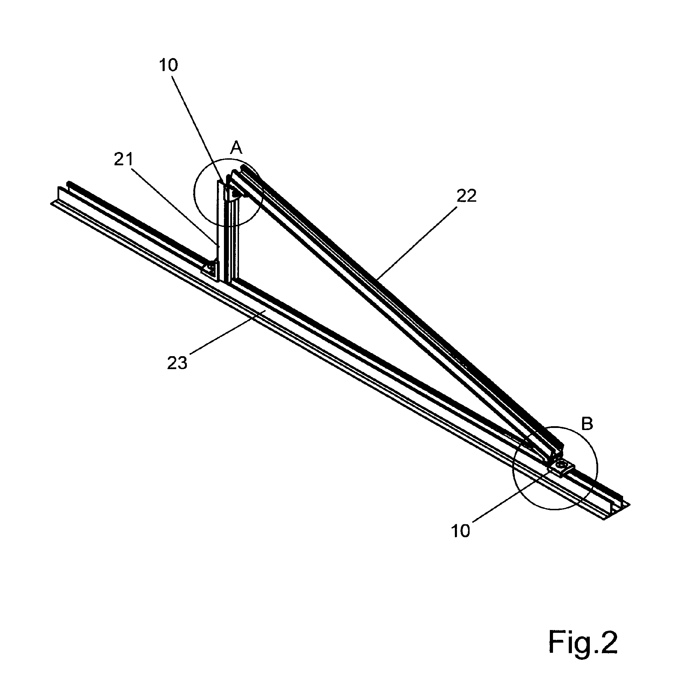

**Figur 2** zeigt die Verwendung des erfindungsgemäßen Verbinderelements 10 bei der Montage mehrerer Profilschienen. Mit Hilfe des erfindungsgemäßen Verbinderelements 10 werden zwei Profilschienen 21 und 22 auf einer Trägerprofilschiene 23 montiert. Die kurze Profilschiene 21 wird in einem rechten Winkel auf der Trägerprofilschiene 23 befestigt. Die Profilschiene 22 wird derart über die Verbinderelemente 10 mit dem freien Ende der Profilschiene 21 und der Trägerprofilschiene 23 verbunden, dass die Profilschiene 22 beispielsweise als schräges Auflager für die Montage einer Solaranlage dienen kann. An den mit A und B bezeichneten Positionen der Anordnung wird die Verbindung der Profilschienen 21 und 22 bzw. 22 und 23 mit Hilfe eines erfindungsgemäßen Verbinderelementes 10 realisiert.

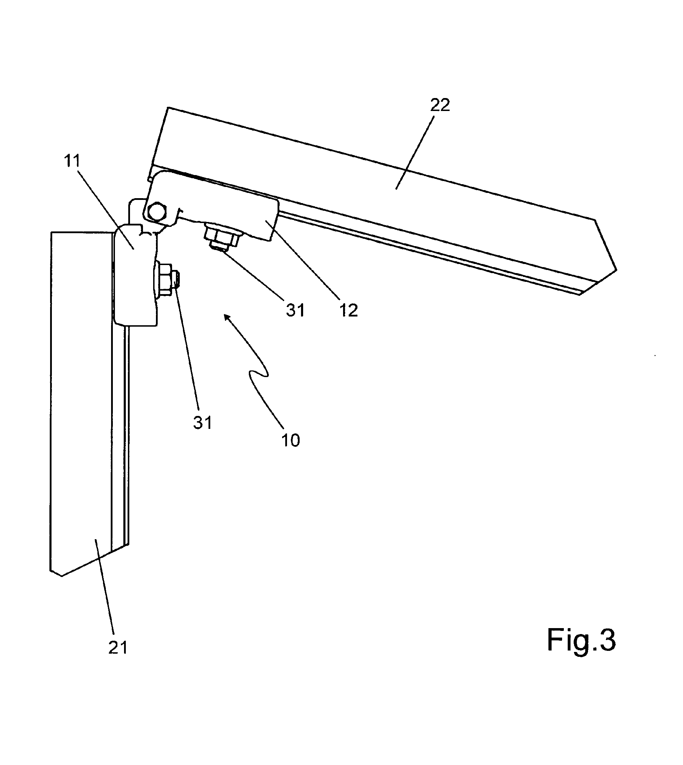

**Figur 3** zeigt eine Seitenansicht des in Figur 2 dargestellten Ausschnitts A. Das Verbinderelement 10 verbindet die Profilschienen 21 und 22 in einem Winkel < 90°. Die Schenkel 11 und 12 des Verbinderelements 10 sind mit Befestigungsmitteln, beispielsweise mit Schrauben 31 an den Profilschienen 21 und 22 befestigt. Als Widerlager für die Schrauben 31 sind vorzugsweise Gewindeplatten (hier nicht sichtbar) vorgesehen, die in an sich bekannter Weise innerhalb der Profilschienen 21, 22 fixiert sind. Bei der Befestigung der Bauteile 21 und 22 aneinander ist der Öffnungswinkel der beiden Schenkel 11 und 12 des Verbinderelements 10 und damit der Winkel der Bauteile zueinander frei einstellbar.

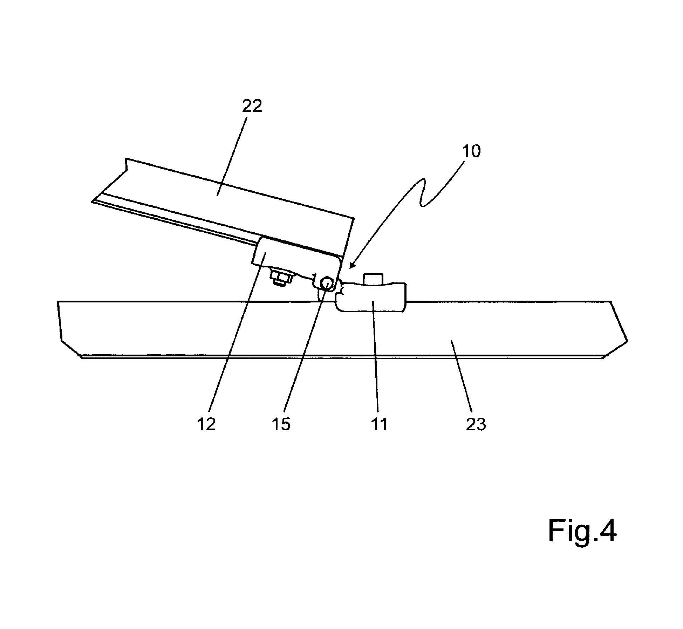

**Figur 4** zeigt eine Seitenansicht des in Figur 2 dargestellten Ausschnitts B. Auch an dieser Stelle sind die Profilschienen 22 und 23 mittels des erfindungsgemäßen Verbinderelements 10 miteinander verbunden. Um den Öffnungswinkel α von beispielsweise 15° zwischen den Profilschienen 22 und 23 zu realisieren, sind die Schenkel 11 und 12 des Verbinderelements 10 in der Weise aneinandergefügt, dass im Vergleich mit der in der Figur 1 gezeigten Anordnung der Schenkel 11 und 12 einer der Schenkel um 180° gedreht ist. Bei dieser Anordnung umschließen nicht die beiden Schenkel 11 und 12 den Öffnungswinkel α zwischen den aneinander zu befestigenden Bauteilen 22 und 23. Vielmehr liegen die Schenkel 11 und 12 des Verbinderelements 10 gewissermaßen hintereinander, sodass der Winkel α bei dieser Anordnung von dem Schenkel 12 und der Profilschiene 23 umschlossen wird und der Schenkel 11 "außerhalb des Öffnungswinkels α" an der Profilschiene 23 befestigt ist. Diese Verwendung des erfindungsgemäßen Verbinderelements 10 wird dadurch ermöglicht, dass die gelenkige Verbindung zwischen den Schenkeln 11 und 12 lösbar ist. Durch Entfernen des Zylinderstiftes 15 kann die Orientierung der Schenkel 11 und 12 zueinander geändert werden und das Verbinderelement 10 sehr variabel eingesetzt werden.

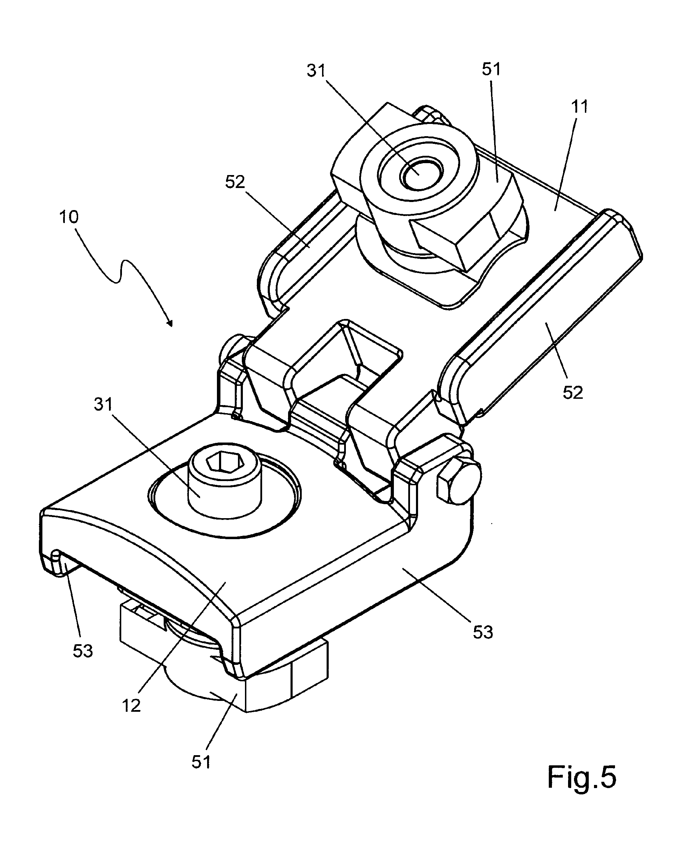

Die **Figur 5** zeigt das erfindungsgemäße Verbinderelement 10 in der Orientierung der Schenkel 11 und 12 zueinander, wie sie in dem mit B bezeichneten Ausschnitt der Anordnung in Figur 2 eingesetzt wird. Die Schenkel 11 und 12 sind so miteinander verbunden, dass das Befestigungsmittel 31 einmal von der einen Seite und einmal von der anderen Seite der Schenkel 11 und 12 hindurchgeführt wird. Auf der beispielsweise einem Schraubenkopf des Befestigungsmittels 31 gegenüberliegenden Seite ist jeweils eine Gewindeplatte 51 vorgesehen, die zur Befestigung der Schenkel 11 und 12 an einer Profilschiene oder einem anderen Bauteil vorgesehen sind. Hierbei werden die Gewindeplatten 51 in an sich bekannter Weise in eine Profilschiene eingeführt und durch Untergreifen von nach innen ragenden Vorsprüngen der Profilschiene in an sich bekannter Weise fixiert.

An den seitlichen Außenkanten der Schenkel 11 und 12 sind Führungsleisten 52 und 53 vorgesehen. Die Führungsleisten 52 und 53 dienen der vereinfachten Positionierung des Verbinderelements 10 auf einer Profilschiene, wobei die seitlichen Führungsleisten 52, 53 so gestaltet sind, dass sie Stege oder Abschnitte einer Profilschiene von außen umgreifen (siehe Figur 4) und so die Positionierung und die Fixierung des Verbinderelements 10 auf der Profilschiene erleichtern und die Verbindung stabilisieren.

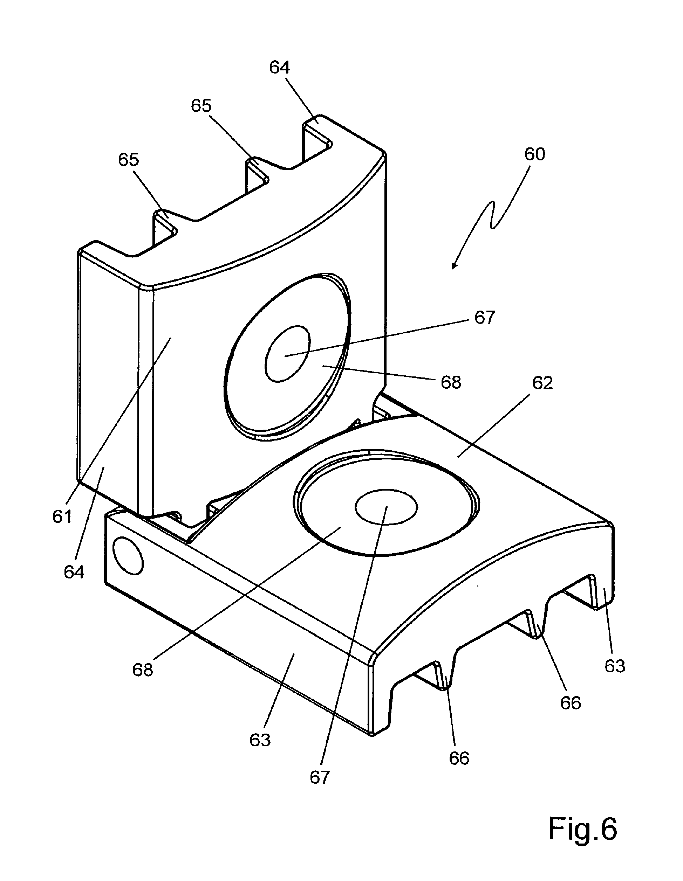

**Figur 6** zeigt eine weitere Ausführungsform 60 des erfindungsgemäßen Verbinderelements. Die Schenkel 61 und 62 sind in den seitlichen Bereichen mit seitlichen Führungsleisten 63 und 64 ausgestattet. In dieser Ausführungsform sind parallel zu den seitlichen Führungsleisten 63 und 64 weitere Leisten 65 und 66 vorgesehen, die im Wesentlichen parallel zu den seitlichen Führungsleisten 63 und 64 im Bereich der Fläche verlaufen. Die Leisten 65 und 66 sind vorzugsweise so gestaltet, das sie in entsprechende Abschnitte einer Profilschiene eingreifen und damit die Positionierung und Fixierung des Verbinderelements 60 auf einer Profilschiene weiter erleichtern und den Halt verbessern.

Die einander zugewandten Flächen der Schenkel 61 und 62 sind vorzugsweise konvex gewölbt, wodurch zum einen die Stabilität des Verbinderelements durch eine erhöhte Materialstärke weiter verbessert wird. Zum anderen wird die Ausbildung von scharfen Kanten vermieden.

In dem hier gezeigten Ausführungsbeispiel sind beide Schenkel 61 und 62 jeweils mit einem Rundloch 67 versehen. In anderen Ausführungsformen kann einer oder können beide Schenkel stattdessen ein Langloch aufweisen, um die Variabilität bei der Verwendung des Verbinderelements 10 noch weiter zu erhöhen. Die Rundlöcher 67 oder in entsprechender Weise die Langlöcher können von einer Vertiefung bzw. Einsenkung 68 in der Oberfläche der Schenkel 61 und 62 umgeben sein. Diese Vertiefung oder Einsenkung 68 dient der bündigen Aufnahme von beispielsweise Senkkopfschrauben.

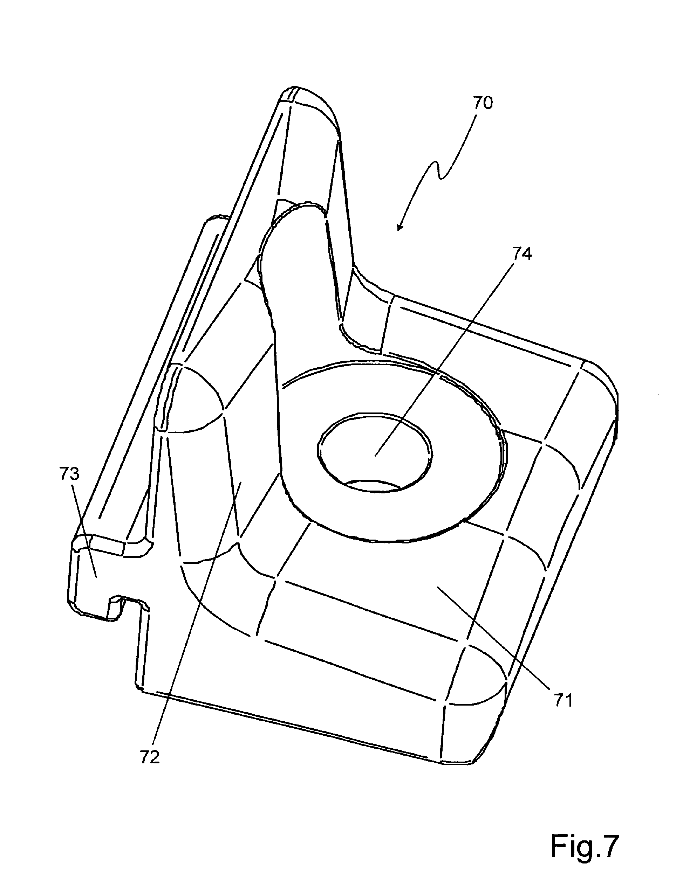

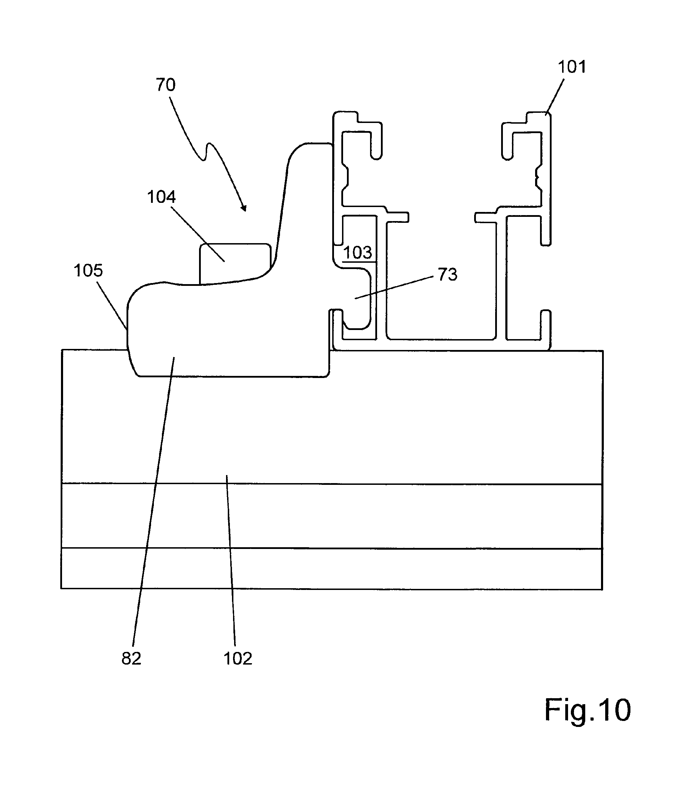

**Figur 7** zeigt einen erfindungsgemäßen Kreuzverbinder 70 in einer Ansicht von schräg oben. Der Kreuzverbinder 70 umfasst einen ersten Schenkel 71 und einen zweiten Schenkel 72, die im Wesentlichen in einem rechten Winkel zueinander stehen. Der zweite Schenkel 72 weist auf seiner dem Schenkel 71 abgewandten Fläche ein Hakenelement 73 in Form eines parallel zu der Breite des Schenkels 71 verlaufenden Stegs auf. Das Hakenelement 73 ist dazu vorgesehen, in eine Einlegenut einer ersten Profilschiene (siehe Figur 10) eingehakt zu werden. Hierbei kann es sich beispielsweise um eine seitliche Einlegenut einer Profilschiene handeln. Über eine Bohrung 74, hier in Form eines Rundlochs, kann mittels eines Befestigungsmittels der Kreuzverbinder 70 mit einer weiteren Profilschiene (hier nicht gezeigt) oder einem anderen Bauteil verbunden werden, die bzw. das quer zu der ersten Profilschiene angeordnet werden kann. Als Widerlager für das Befestigungsmittel kann eine übliche Gewindeplatte eingesetzt werden, die in an sich bekannter Weise innerhalb der weiteren Profilschiene oder unterhalb des anderen Bauteils fixiert wird.

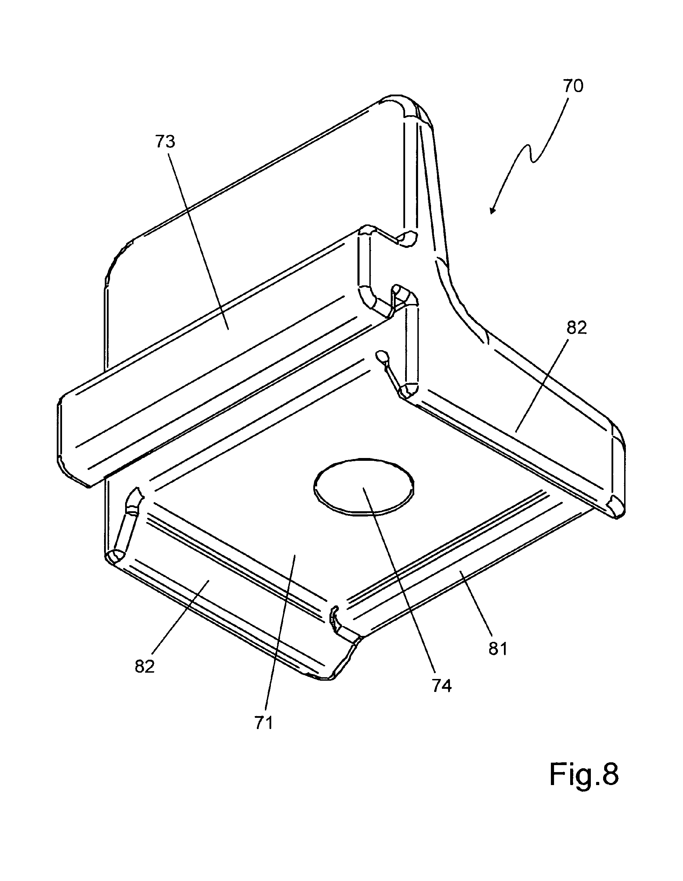

**Figur 8** zeigt den Kreuzverbinder 70 in einer Ansicht von schräg unten. Parallel zu der vorderen Kante des Schenkels 71 ist auf der Unterseite des Kreuzverbinders 70 eine Verdickung 81 in Form eines Steges vorgesehen. Wenn der Schenkel 71 des Kreuzverbinders 70 auf einer Profilschiene aufgelegt wird, liegt die Unterseite des Kreuzverbinders 70 nicht eben auf, sondern der Kreuzverbinder 70 liegt im vorderen Bereich mit dem Steg 81 auf der Profilschiene auf. Wenn nun der Kreuzverbinder 70 mit einem Befestigungsmittel, das durch das Rundloch 74 hindurchgeführt wird, auf der Profilschiene befestigt wird, gerät der Kreuzverbinder 70 beim Spannen des Befestigungsmittels gewissermaßen in eine Hohllage, wodurch das Hakenelement nach unten und gegen die erste Profilschiene gedrückt wird. Hierdurch wird eine klemmende Wirkung der Verbindung des Hakenelements 73 mit der Einlegenut, in die das Hakenelement 73 eingefügt ist, erzielt. Durch diese verstärkte Klemmwirkung wird die Verbindung des Kreuzverbinders 70 mit den aneinander zu befestigenden Bauteilen (siehe Figur 10) weiter verstärkt und stabilisiert.

Die seitlichen Bereiche des Kreuzverbinders 70 im Bereich des Schenkels 71 sind mit seitlichen Führungsleisten 82 versehen. Diese Führungsleisten 82 umgreifen Abschnitte der Profilschiene bei der Befestigung des Kreuzverbinders 70 auf der Profilschiene, sodass hierdurch die Positionierung und Befestigung des Kreuzverbinders 70 auf der Profilschiene weiter stabilisiert wird.

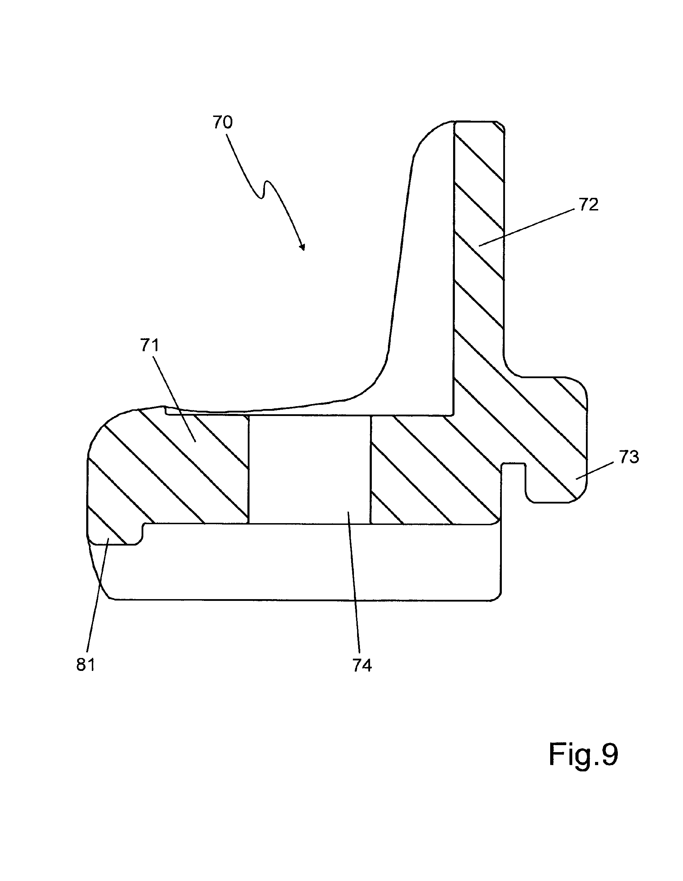

**Figur 9** zeigt eine Schnittdarstellung des Kreuzverbinders 70 mit dem ersten Schenkel 71 und dem zweiten Schenkel 72. Der erste Schenkel 71 weist die zentrale Bohrung 74 auf, die zum Hindurchführen eines Befestigungsmittels vorgesehen ist. Die dem ersten Schenkel 71 abgewandte Fläche des Schenkels 72 ist mit dem stegförmigen Hakenelement 73 ausgestattet. Die Unterseite der vorderen Kante des ersten Schenkels 71 weist eine Verdickung 81 oder eine Nase in Form eines parallel zu der Kante verlaufenden Steges auf.

Die schematische Darstellung in **Figur 10** verdeutlicht die Verbindung von zwei Bauteilen 101 und 102 mit Hilfe des erfindungsgemäßen Kreuzverbinders 70. Das Hakenelement 73 des Kreuzverbinders 70 greift in eine seitliche Einlegenut 103, die eine C-förmige Aufnahme bildet, einer hier im Schnitt gezeigten ersten Profilschiene 101 ein. Mittels eines Befestigungsmittels, insbesondere einer Schraube 104, wird der Kreuzverbinder 70 auf einer weiteren Profilschiene 102, die hier in Seitenansicht gezeigt ist, befestigt. Hierbei dient eine innerhalb der Profilschiene 102 angeordnete Gewindeplatte (hier nicht sichtbar) als Widerlager für das Befestigungsmittel 104. Die seitlichen Führungsleisten 82 des Kreuzverbinders 70 umgreifen die Profilschiene 102 von außen, sodass der Kreuzverbinder 70 stabil auf der Profilschiene 102 positioniert ist. In dieser Darstellung nicht zu erkennen ist die Verdickung 81 im Bereich der vorderen Kante 105 des Kreuzverbinders 70, mit der der Kreuzverbinder 70 auf der Profilschiene 102 aufliegt. Durch das Spannen des Befestigungsmittels 104 gerät der Kreuzverbinder 70 hierdurch in eine Hohllage und wird gegen die Profilschiene 101 gedrückt, sodass die Klemmwirkung des Hakenelements 73 innerhalb der seitlichen Einlegenut 103 der Profilschiene 101 verstärkt wird. Statt der Verbindung von zwei Profilschienen 101 und 102 können auch andere Bauteile mittels des erfindungsgemäßen Kreuzverbinders 70 miteinander verbunden werden, beispielsweise ein Dachhaken an einer Profilschiene oder eine Stockschraube an einer Profilschiene.

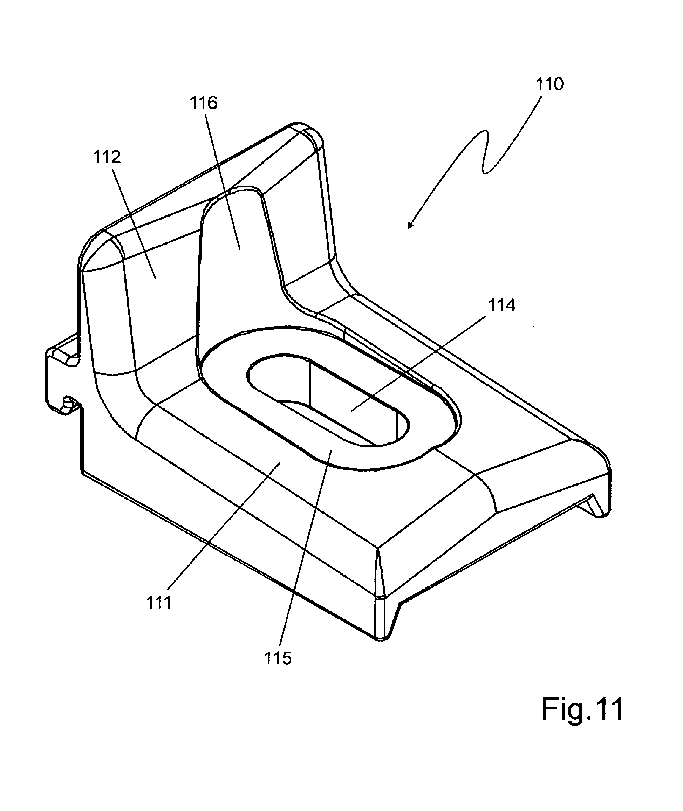

**Figur 11** zeigt eine weitere Ausführungsform 110 des erfindungsgemäßen Kreuzverbinders. Statt eines Rundlochs ist in dieser Ausführungsform ein Langloch 114 vorgesehen, das die variable Einsetzbarkeit des Kreuzverbinders 110 erhöht. Die einander zugewandten Flächen der Schenkel 111 und 112 des Kreuzverbinders 110 sind im Wesentlichen konvex gewölbt. Im Bereich des Langlochs 114 ist eine umlaufende Einsenkung 115 vorgesehen, um eine ebene Auflagefläche für beispielsweise einen Schraubenkopf eines Befestigungsmittels bereitzustellen. Im mittleren Bereich des zweiten Schenkels 112 ist die konvexe Wölbung der Fläche von einer Ausnehmung oder Vertiefung 116 unterbrochen, um gegebenenfalls Platz für die Betätigung eines Befestigungsmittels bereitzustellen.

## Patentansprüche

1. Verbinderelement (10; 60) zur Verbindung von zwei Bauteilen (21, 22, 23) mit einem ersten und einem zweiten in einem Winkel zueinander stehenden Schenkel (11, 12; 61, 62), **dadurch gekennzeichnet, dass** die Schenkel (11, 12; 61; 62) gelenkig miteinander verbunden sind.

2. Verbinderelement nach Anspruch 1, **dadurch gekennzeichnet, dass** die gelenkige Verbindung lösbar ist.

3. Verbinderelement nach Anspruch 1 oder Anspruch 2, **dadurch gekennzeichnet, dass** eine Fläche wenigstens eines Schenkels (11, 12; 61; 62) parallel zu den seitlichen Außenkanten seitliche Führungsleisten (52, 53; 63, 64) aufweist.

4. Verbinderelement nach Anspruch 3, **dadurch gekennzeichnet, dass** zwischen den seitlichen Führungsleisten (63, 64) wenigstens eine parallel dazu verlaufende weitere Leiste (65, 66) vorgesehen ist.

5. Verbinderelement nach einem der vorhergehenden Ansprüche,
**dadurch gekennzeichnet, dass** eine der Flächen wenigstens eines Schenkels (11, 12; 61, 62) eine konvexe Wölbung aufweist.

6. Verbinderelement nach einem der vorhergehenden Ansprüche,
**dadurch gekennzeichnet, dass** beide Schenkel (11, 12; 61, 62) jeweils ein Langloch oder jeweils ein Rundloch (67) aufweisen.

7. Verbinderelement nach einem der Ansprüche 1 bis 5, **dadurch gekennzeichnet, dass** ein Schenkel ein Rundloch und ein Schenkel ein Langloch aufweisen.
